(19)

Europäisches
Patentamt
European
Patent Office
Office européen
des brevets

(11) **EP 4 335 943 A1**

(12) **EUROPEAN PATENT APPLICATION**
published in accordance with Art. 153(4) EPC

(43) Date of publication:
**13.03.2024 Bulletin 2024/11**

(21) Application number: **22799096.7**

(22) Date of filing: **03.05.2022**

(51) International Patent Classification (IPC):
***C22C 21/06*** (2006.01)     ***C22C 1/04*** (2023.01)
***C22F 1/043*** (2006.01)     ***B22F 10/00*** (2021.01)

(52) Cooperative Patent Classification (CPC):
**B22F 1/00; B22F 10/00; C22C 1/04; C22C 21/06;
C22F 1/043;** Y02P 10/25

(86) International application number:
**PCT/KR2022/006336**

(87) International publication number:
**WO 2022/235053 (10.11.2022 Gazette 2022/45)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **04.05.2021   KR 20210057849**

(71) Applicant: **Acts Technologies Inc.
Seoul 06232 (KR)**

(72) Inventor: **LEE, Goon Hee
Seoul 06076 (KR)**

(74) Representative: **Schön, Christoph
Dr. Schön, Neymeyr & Partner mbB
Bavariaring 26
80336 München (DE)**

(54) **HIGH-STRENGTH ALUMINUM ALLOY FOR 3D PRINTING, AND MANUFACTURING METHOD THEREFOR**

(57)     The present invention relates to an Al-Mg-Zr-Si-based high-strength aluminum alloy for 3D printing, comprising, by wt%, 2-13 of Mg, 1-5 of Si, 0.5-1.5 of Zr, and the balance of Al and inevitable impurities, wherein the wt% of Mg and of Si satisfy relationship 1. [Relationship 1] $1.5 \leq [Mg] / [Si] \leq 8.5$ ([Mg] means wt% of Mg and [Si] means wt% of Si in relationship 1.)

EP 4 335 943 A1

**Description**

**Technical Field**

The present disclosure relates to an Al-Mg-Zr-Si-based high-strength aluminum alloy for 3D printing, the alloy containing 2% to 13% of Mg, 1% to 5% of Si, and 0.5% to 1.5% of Zr in wt%, and the balance of Al, and to a method of manufacturing the same.

**Background Art**

Metal three-dimensional printing (3D printing) is a processing method based on additive manufacturing, which uses computer-aided design (CAD) models to easily manufacture products in complicated forms that are not implementable using existing manufacturing technology.

Metal 3D printing is advantageous in reducing the time required for product development compared to existing processing technologies, such as casing, forging, welding, extruding, and the like.

Due to such an advantage, in the related art, including Korean Patent No. 10-1754523, Korean Patent No. 10-1145124, and the like, methods of manufacturing metal products by applying metal 3D printing technologies have been disclosed. In addition, numerous papers, including Journal of Korean Society of Laser Processing, have published related technologies.

However, to date, there are still difficulties in determining the composition of Al-Mg aluminum alloys to obtain sufficient strength and elongation at the same time. In addition, there are significant differences in productivity and quality depending on the types and amounts of elements added, so there are still difficulties in appropriate combinations.

**Disclosure**

**Technical Problem**

To solve the above problems, the present disclosure aims to provide an Al-Mg-Zr-Si-based high-strength aluminum alloy for 3D printing, the alloy containing 2% to 13% of Mg, 1% to 5% of Si, and 0.5% to 1.5% of Zr in wt%, and the balance of Al to obtain yield strength and productivity.

**Technical Solution**

To achieve the above objective, one embodiment of the present disclosure relates to an Al-Mg-X-Y-based aluminum alloy for 3D printing. The Al-Mg-X-Y-based aluminum alloy is characterized in that the X reacts with the Al to form an Al-X intermetallic compound, and the Y reacts with the Mg to form an Mg-Y intermetallic compound.

According to the one embodiment, the X may be any one element selected from among zirconium (Zr), titanium (Ti), scandium (Cs), hafnium (Hf), and yttrium (Y), and the Y may be any one element selected from among silicon (Si) tin (Sn), zinc (Zn), and germanium (Ge).

According to the one embodiment, an Al-Mg-Zr-Si-based high-strength aluminum alloy for 3D printing, characterized by containing 2% to 13% of Mg, 1% to 5% of Si, and 0.5% to 1.5% of Zr in wt%, and the balance of Al and inevitable impurities, in which a weight ratio of the Mg to the Si satisfies Relation 1 below, may be provided.

$$[Relation\ 1]$$

$$1.5 \leq [Mg]/[Si] \leq 8.5$$

(In Relation 1, [Mg] means the wt% of the Mg, and [Si] means the wt% of the Si.)

According to the one embodiment, an Al-Mg-Zr-Si-based high-strength aluminum alloy for 3D printing may contain 5 to 10 wt% of the Mg.

According to the one embodiment, the Al-Mg-Zr-Si-based high-strength aluminum alloy for 3D printing may further contain 0.01 to 0.2 wt% of the Ca.

According to the one embodiment, the Al-Mg-Zr-Si-based high-strength aluminum alloy for 3D printing may be provided in a powder or wire form.

According to another embodiment of the present disclosure, the present disclosure relates to an Al-Mg-Zr-Si-based high-strength aluminum alloy product manufactured by 3D printing. The Al-Mg-Zr-Si-based high-strength aluminum alloy contains 2% to 13% of Mg, 1% to 5% of Si, and 0.5% to 1.5% of Zr in wt%, and the balance of Al and inevitable impurities and is characterized in that a weight ratio of the Mg to the Si satisfies Relation 1 below.

$$[Relation\ 1]$$

$$1.5\ \leq\ [Mg]/[Si]\ \leq\ 8.5$$

(In Relation 1, [Mg] means the wt% of the Mg, and [Si] means the wt% of the Si.)

According to the one embodiment, the high-strength aluminum alloy product may have a yield strength of 400 to 500 MPa.

According to one embodiment, the Al-Mg-Zr-Si-based high-strength aluminum alloy may contain 5 to 10 wt% of the Mg.

According to one embodiment, the high-strength aluminum alloy product may have an elongation of 7% or more.

According to a further embodiment of the present disclosure, the present disclosure relates to a method of manufacturing an Al-Mg-Zr-Si-based high-strength aluminum alloy product through 3D printing. The method is characterized by including (a) preparing an Al-Mg-Zr-Si-based aluminum alloy powder or wire containing 2% to 13% of Mg, 1% to 5% of Si, and 0.5% to 1.5% of Zr in wt%, and the balance of Al and inevitable impurities, in which a weight ratio of the Mg to the Si satisfies Relation 1 below, and (b) manufacturing a printed product of the Al-Mg-Zr-Si-based aluminum alloy powder through 3D printing.

$$[Relation\ 1]$$

$$1.5\ \leq\ [Mg]/[Si]\ \leq\ 8.5$$

(In Relation 1, [Mg] means the wt% of the Mg, and [Si] means the wt% of the Si.)

According to the one embodiment, the Al-Mg-Zr-Si-based aluminum alloy powder or wire may contain 5 to 10 wt% of the Mg.

According to the one embodiment, the Al-Mg-Zr-Si-based aluminum alloy powder or wire may further contain 0.01 to 0.2 wt% of Ca.

**Advantageous Effects**

In a method of manufacturing an Al-Mg-Zr-Si-based high-strength aluminum alloy for 3D printing according to the present disclosure, the composition of the aluminum alloy is limited to the following components: 2% to 13% of Mg, 1% to 5% of Si, and 0.5% to 1.5% of Zr in wt%, and the balance of Al and inevitable impurities, so an aluminum alloy product for 3D printing having a yield strength of 400 MPa or more can be provided.

**Description of Drawings**

FIG. 1 is a flowchart illustrating a method of manufacturing an Al-Mg-Zr-Si-based high-strength aluminum alloy for 3D printing according to one embodiment of the present disclosure; and

FIG. 2 is a graph to explain the correlation between ultimate tensile strength and beam speed depending on the amount of Si when fixing a laser output at 170 W.

**Mode for Invention**

Hereinafter, an Al-Mg-Zr-Si-based high-strength aluminum alloy for 3D printing and a method of manufacturing the same, according to the present disclosure, will be described in detail. The following drawings are provided as examples to fully convey the idea of the present disclosure to those skilled in the art. Accordingly, the present disclosure is not limited to the following drawings and may be embodied in other forms. In addition, the following drawings may be exaggerated to clarify the spirit of the present disclosure. Unless otherwise defined, all terms including technical and scientific terms used herein have the same meaning as commonly understood by one of ordinary skill in the art to which the present disclosure belongs. Furthermore, in the following description, it is to be noted that, when the functions of conventional elements and the detailed description of elements related to the present disclosure may make the gist of the present disclosure unclear, a detailed description of those elements will be omitted.

Typically, types and amounts of elements additionally added to Al-Mg-based aluminum alloys are controlled to obtain the desired physical properties, such as strength and elongation. In this process, there are difficulties in obtaining appropriate strength and elongation at the same time. In addition, there are significant differences in productivity and quality depending on the types and amounts of elements added, so there are still many difficulties in appropriately combining the elements.

One embodiment of the present disclosure relates to an Al-Mg-based high-strength aluminum alloy for 3D printing and more preferably more preferably to an Al-Mg-X-Y-based aluminum alloy containing two or more elements in the Al-Mg-based aluminum alloy.

The X and Y used herein mean elements contained in the Al-Mg-based aluminum alloy. Specifically, the X means an element that forms an intermetallic compound with the Al in the Al-Mg-based aluminum alloy, and the Y means an element that forms an intermetallic compound with the Mg in the Al-Mg-based aluminum alloy.

According to one embodiment, the mechanical properties of the Al-Mg-X-Y-based aluminum alloy may be controlled by designing an appropriate range of the composition of X or Y. For example, when the composition of the X in the Al-Mg-X-Y-based aluminum alloy increases, hot cracking, commonly occurring in the case of Al-Mg for 3D printing, may be prevented while enhancing strength. In particular, the X may be present in a supersaturated state in the Al-Mg-X-Y-based aluminum alloy through melting caused by laser energy absorption during 3D printing and a quenching process ($10^6$ C°/sec).

Thereafter, the X is precipitated inside during a heat treatment process, thereby significantly enhancing the strength of the Al-Mg-X-Y-based aluminum alloy. However, when the X is excessively contained in the Al-Mg-X-Y-based aluminum alloy, some of the X may be unsaturated and thus present in a segregated form. This may significantly reduce the elongation of the aluminum alloy and increase brittleness.

*The Y is characterized by reacting with Mg without reacting with Al in the Al-Mg-X-Y-based aluminum alloy. Specifically, the Y may form an intermetallic compound with the Mg to prevent hot cracking during high-speed molding, thereby improving the quality of 3D-printed products and may enhance the strength of the Al-Mg-X-Y-based aluminum alloy. Like the X, the Y may also be precipitated inside the Al-Mg-X-Y-based aluminum alloy, thereby significantly enhancing the strength. In addition, when the Y is excessively contained in the Al-Mg-X-Y-based aluminum alloy, the elongation may be significantly reduced, and the brittleness may be increased.

According to one embodiment, the X may react with the Al to form an Al-X intermetallic compound, and the Y may react with the Mg to form an Mg-Y intermetallic compound. In addition, the fraction of the Al-X intermetallic compound and the Mg-Y intermetallic compound in the Al-Mg-X-Y-based aluminum alloy and the microstructure of the alloy may vary depending on 3D printing process conditions (for example, laser output, beam speed, laser beam diameter, laser beam scan pattern, build plate temperature during the 3D printing process, and heat treatment conditions after 3D printing output). In addition, through this, users may control the physical properties, quality, and productivity of the products.

According to one embodiment, the X is characterized by being any one element selected from among zirconium (Zr), titanium (Ti), scandium (Sc), hafnium (Hf), and yttrium (Y), and the Y is characterized by being any one element selected from among silicon (Si) tin (Sn), zinc (Zn), and germanium (Ge). However, the X and the Y are not limited thereto and may be transformed into a predetermined component capable of reacting with the Al or the Mg.

Hereinafter, in this specification, Zr is to be described as the X element, and Si is to be described as the Y element.

Accordingly, the present disclosure may provide an Al-Mg-Zr-Si-based high-strength aluminum alloy for 3D printing by adding Si and Zr to the Al-Mg-based aluminum alloy while constructing the composition of the alloy as follows: 2% to 13% of Mg, 1% to 5% of Si, and 0.5% to 1.5% of Zr in wt%, and the balance of Al and inevitable impurities, enabling an aluminum alloy product having a yield strength (YS) of 400 MPa or more to be ultimately manufactured by 3D printing, and a method of manufacturing the same.

In addition, according to another embodiment of the present disclosure, the Al-Mg-Zr-Si-based high-strength aluminum alloy for 3D printing may further contain 0.01 to 0.2 wt% of Ca to inhibit oxidation and vaporization of the Mg in the manufacturing process of the alloy, thereby improving productivity.

In typical Al-Mg-based aluminum alloys, Mg is oxidized during the manufacturing process, so large amounts of oxides, such as MgO, $Al_2O_3$, and $Al_2MgO_4$, are formed, causing various defects in the metal.

To prevent this, in the present disclosure, 0.01 to 0.2 wt% of Ca may be added to the Al-Mg-based aluminum alloy, more preferably, the Al-Mg-Zr-Si-based aluminum alloy. The Ca may react with the Mg contained in the aluminum alloy to form a $(Mg,Ca)O_2$ film, thereby preventing the Mg from being oxidized.

In addition, in typical Al-Mg-based aluminum alloys, a melt pool is formed due to the melting caused by a laser beam during 3D printing, causing some of the Mg to be lost through vaporization. During this process, some of the Mg may be vaporized, resulting in airborne fume generation. In this case, the generated fumes may result in laser beam scattering during laser scanning of a 3D printer, thereby adversely affecting 3D printing productivity and product quality. To prevent this, in the present disclosure, the ignition temperature of Mg may be increased by containing the Ca.

In other words, with the Ca that increases the ignition temperature of Mg, excessive fumes may be prevented from being generated at the molten sites. In addition, the Mg may be prevented from being lost from the melt pool through the vaporization. Through this, the productivity can be improved.

Hereinafter, the composition range of each component in the Al-Mg-Zr-Si-based high-strength aluminum alloy for 3D printing, according to one embodiment of the present disclosure, will be described in detail. Hereinafter, unless otherwise specified, the unit is wt%.

According to one embodiment, the Al-Mg-Zr-Si-based high-strength aluminum alloy for 3D printing may contain 2% to 13% of Mg, 1% to 5% of Si, and 0.5% to 1.5% of Zr in wt%, and the balance of Al and inevitable impurities.

Mg is contained in an amount of 2 to 13 wt%.

The Mg may serve to determine the strength of the Al-Mg-Zr-Si-based high-strength aluminum alloy. Specifically, the Mg may realize a precipitation-strengthening effect by precipitating the Si and $Mg_2Si$ phases in the alloy. For this reason, to obtain the strength of the Al-Mg-Zr-Si-based high-strength aluminum alloy, Mg is preferably contained in an amount of 2 wt% or more. When the Mg is contained in an amount of less than 2 wt%, sufficient strength may be difficult to be obtained.

On the other hand, when the Mg is contained in an amount exceeding 13 wt%, excessive fumes are generated during the 3D printing process, making it difficult to print or manufacture good products. This is because fumes generated due to the vaporization of some of the Mg may result in laser beam scattering. For this reason, the Mg may be provided in an amount of 2 to 13 wt%, more preferably in an amount of 5 to 10 wt%, and even more preferably in an amount of 5 to 7 wt%.

Si is contained in an amount of 1 to 5 wt%.

As described above, the Si may react with the Mg, thereby precipitating a $Mg_2Si$ phase having high hardness. This may significantly induce precipitation strengthening in the Al-Mg-Zr-Si-based high-strength aluminum alloy and thus enhance the strength. When the Si is contained in an amount of less than 1 wt%, hot cracking may occur in the Al-Mg-Zr-Si-based high-strength aluminum alloy during high-speed molding in the 3D printing process, leading to a deterioration in the quality of the 3D printed product.

According to one embodiment, the Si may be contained in an amount of 1 wt% or more so that the aluminum alloy obtains sufficient strength. However, when the Si is contained in an amount exceeding 5 wt%, there is a disadvantage in that fractions of the $Mg_2Si$ phase are excessive, leading to a decrease in the elongation.

On the other hand, in the Al-Mg-Zr-Si-based high-strength aluminum alloy, the Si and the Mg may satisfy Relation 1 below.

$$[\text{Relation 1}]$$

$$1.5 \leq [\text{Mg}]/[\text{Si}] \leq 8.5$$

(In Relation 1, [Mg] means the wt% of the Mg, and [Si] means the wt% of the Si.)

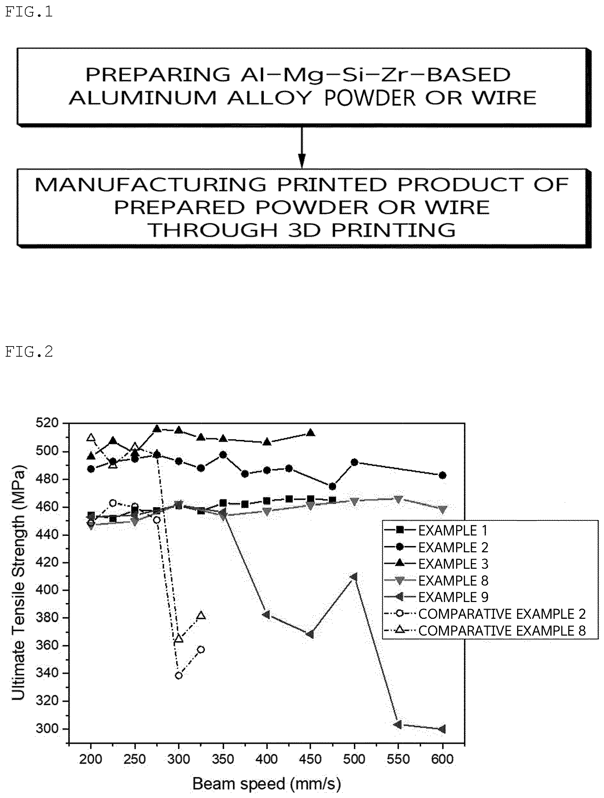

When the weight ratio of the Mg to the Si in the Al-Mg-Zr-Si-based high-strength aluminum alloy is lower than 1.5, the amount of the Mg is insufficient compared to the amount of the Si, so the degree to which the $Mg_2Si$ phase is precipitated may be reduced, thereby insignificantly enhancing the strength. Furthermore, a decrease in the weight ratio of Si during 3D printing may require additional energy during the 3D printing and thus significantly affect productivity. The effect of the Si on a decrease in productivity is to be explained in more detail through FIG. 2 to be described later.

On the other hand, when the weight ratio of the Mg to the Si in the Al-Mg-Zr-Si-based high-strength aluminum alloy is 8.5 or more, the ratio of the Si is relatively reduced, and the $Mg_2Si$ phase may fail to be sufficiently precipitated. For this reason, the ratio of the Mg to the Si in the Al-Mg-Zr-Si-based high-strength aluminum alloy may be in a range of 1.5 to 8.5 and is more preferably in the range of 1.5 to 7.0.

Zr is contained in an amount of 0.5 to 1.5 wt%.

The Zr contributes to grain refinement in typical aluminum (Al) alloys and thus may serve to inhibit hot cracking during 3D printing of the Al-Mg-based aluminum alloy. In addition, the Zr may react with the Al to form an $Al_3Zr$ phase. In other words, the Zr may improve the elongation of the Al-Mg-Zr-Si-based high-strength aluminum alloy through grain refinement and enhance the strength by precipitating the $Al_3Zr$ phase at the same time. The Zr is added in an amount of 0.5 wt% or more to realize this effect.

However, when the amount of the Zr exceeds 1.5 wt%, the melting point of the Al-Mg-Zr-Si-based high-strength aluminum alloy may increase, causing Mg to be vaporized and the amount thereof being lost to be increased. In addition, some of the Zr may be unsaturated and precipitated in a segregated form. This may significantly reduce the elongation of the Al-Mg-Zr-Si-based high-strength aluminum alloy, increase the brittleness, and ultimately deteriorate the quality of the 3D-printed product. For this reason, the Zr is contained in an amount of 0.5 to 1.5 wt%.

Ca is contained in an amount of 0.2 wt% or less.

As described above, the Ca may prevent the Mg from being oxidized and increase the ignition temperature of the Mg of the Mg, thereby inhibiting fume generation.

The Ca may be selectively contained depending on the amount of the Mg in the alloy. For example, when the amount of the Mg in the Al-Mg-Zr-Si-based high-strength aluminum alloy is 5 wt% or less, the Mg is oxidized and insignificantly affects the aluminum alloy. As a result, Ca may not be contained.

However, when the amount of the Mg in the Al-Mg-Zr-Si-based high-strength aluminum alloy exceeds 5 wt%, the Mg is oxidized, which may affect productivity and the strength of the Al-Mg-Zr-Si-based high-strength aluminum alloy. In this case, the Ca may be contained variably depending on the Mg, and more preferably, the weight ratio of the Mg to the Ca may be in a range of 1:0.8 to 1:1.2.

When the weight ratio of the Mg to the Ca is lower than 1:0.8, the Ca is contained in a relatively smaller amount than that of the Mg, resulting in oxidation and vaporization of the Mg and thus leading to a decrease in productivity. When the weight ratio of the Mg to the Ca exceeds 1:1.2, the Ca may act as an impurity in the Al-Mg-Zr-Si-based high-strength aluminum alloy, resulting in a decrease in the strength of the aluminum alloy.

For this reason, the weight ratio of the Mg to the Ca in the Al-Mg-Zr-Si-based high-strength aluminum alloy is preferably in a range of 1:0.8 to 1:1.2.

According to one embodiment, the Al-Mg-Zr-Si-based high-strength aluminum alloy may have a form, such as a piece, powder, wire, or the like, but is not limited thereto.

The composition of the Al-Mg-Zr-Si-based high-strength aluminum alloy for 3D printing, according to one embodiment of the present disclosure, has been described above. Hereinafter, a method of manufacturing an Al-Mg-Zr-Si-based high-strength aluminum alloy for 3D printing, according to one embodiment of the present disclosure, is to be described.

FIG. 1 is a flowchart illustrating the method of manufacturing the Al-Mg-Zr-Si-based high-strength aluminum alloy for 3D printing according to one embodiment of the present disclosure.

Referring to FIG. 1, the method of manufacturing the Al-Mg-Zr-Si-based high-strength aluminum alloy for 3D printing, according to one embodiment of the present disclosure, may include (a) preparing an Al-Mg-Zr-Si-based aluminum alloy powder or wire containing 2% to 13% of Mg, 1% to 5% of Si, and 0.5% to 1.5% of Zr in wt%, and the balance of Al and inevitable impurities, in which a weight ratio of the Mg to the Si satisfies Relation 1 below, and (b) manufacturing a printed product of the Al-Mg-Zr-Si-based aluminum alloy powder through 3D printing. In this case, the weight ratio of the Mg to the Si in the Al-Mg-Zr-Si-based aluminum alloy powder or wire may satisfy Relation 1 below.

$$[Relation\ 1]$$

$$1.5 \leq [Mg]/[Si] \leq 8.5$$

(In Relation 1, [Mg] means the wt% of the Mg, and [Si] means the wt% of the Si.)

In the (a) preparing, the aluminum alloy powder may be prepared using a method, for example, performing gas atomization, extrusion after drawing, or the like on the aluminum alloy having the composition described above.

First, a molten metal may be manufactured by melting a base metal or a base metal compound having the composition described above, and an aluminum alloy ingot may then be formed from the molten metal. In this case, a vacuum or atmospheric induction melting furnace or electric resistance furnace may be used for the melting.

Next, the aluminum alloy powder may be prepared using a method such as gas atomization, extrusion after drawing, or the like. Known methods were used for the melting and powder preparation processes. Thus, the description of the specific preparation process is to be omitted.

In the (b) manufacturing, the aluminum alloy powder produced in the (a) preparing may be printed through 3D printing to manufacture a desired product. In this case, 3D printing may refer to powder bed fusion (PBF) in which metal powder is melted and sintered with a laser beam. Specifically, powder bed fusion (PBF) refers to a method of manufacturing a product by layering the aluminum alloy powder produced in the (a) preparing described above and irradiating the layered powder with an energy laser beam to fusion the aluminum alloy powder.

According to one embodiment, powder bed fusion (PBF) may be used in the (b) manufacturing, but depending on the laser type, laser output, or direct laser beam, the powder may be layered to provide a spacing between lines (hatch spacing) of 50 to 1,000 um and a layer thickness of 10 to 100 um. Powder bed fusion (PBF) may be applied to a 3D printing process based on the direct energy deposition (DED) method that supplies powder or wire and to other typical binder jet 3D metal printing processes.

On the other hand, the Al-Mg-Zr-Si-based high-strength aluminum alloy product, manufactured according to one embodiment of the present disclosure, may contain 2% to 13% of Mg, 1% to 5% of Si, and 0.5% to 1.5% of Zr in wt%, and the balance of Al and inevitable impurities, in which a weight ratio of the Mg to the Si may satisfy Relation 1 below.

[Relation 1]

$$1.5 \leq [Mg]/[Si] \leq 8.5$$

(In Relation 1, [Mg] means the wt% of the Mg, and [Si] means the wt% of the Si.)

The description of Relation 1 above is to be omitted.

According to one embodiment, the Al-Mg-Zr-Si-based high-strength aluminum alloy product, manufactured according to the composition and manufacturing method described above, may have both a yield strength of 400 to 500 MPa and an elongation of 2.7% or more.

Hereinafter, the Al-Mg-Zr-Si-based high-strength aluminum alloy for 3D printing and the method of manufacturing the same, according to the present disclosure, are to be described in more detail through examples. However, the following examples are only a reference for explaining the present disclosure in detail. The present disclosure is not limited thereto and may be implemented in various forms.

In addition, unless otherwise defined, all technical and scientific terms have the same meaning as commonly understood by those skilled in the art to which the present disclosure belongs. The terminology used herein is for the purpose of effectively describing particular embodiments only and is not intended to limit the present disclosure. In addition, the unit of additives not particularly described herein may be wt%.

## A. Comparison of yield strength depending on component composition

Metal raw materials were prepared to have the compositions shown in Table 1 below. After melting the metal raw materials, gas atomization was performed to prepare Al-Mg-Zr-Si-based high-strength aluminum alloy powder.

The prepared aluminum alloy powder was printed through 3D printing based on powder bed fusion (PBF). As for a metal 3D printer, dpert M135 purchased from Daegun Tech was used. A 170-W laser beam was scanned on the aluminum alloy powder using the metal 3D printer to produce an aluminum alloy specimen layered to have a layer thickness of 30 um and a hatch spacing of 150 $\mu$m.

[Table 1]

|  | Mg | Si | Zr | Ca | Mn | Fe | Al |
|---|---|---|---|---|---|---|---|
| Example 1 | 5 | 2 | 1.2 | - | - | - | bal. |
| Example 2 | 7 | 2 | 1.2 | 0.07 | - | - | bal. |
| Example 3 | 7 | 4 | 1.2 | 0.07 | - | - | bal. |
| Example 4 | 9 | 3 | 1.2 | 0.09 | - | - | bal. |
| Example 5 | 10 | 2 | 1.2 | 0.1 | - | - | bal. |
| Example 6 | 10 | 3 | 1.2 | 0.1 | - | - | bal. |
| Example 7 | 13 | 2 | 1.2 | 0.13 | - | - | bal. |
| Comparative Example 1 | 7 | 2 | 0 | 0.07 | - | - | bal. |
| Comparative Example 2 | 10 | 0 | 0.6 | 0.1 | - | - | bal. |
| Comparative Example 3 | 5 | 4 | 1.2 | 0.07 | - | - | bal. |
| Comparative Example 4 | 15 | 1 | 1.2 | 0.07 | - | - | bal. |
| Comparative Example 5 | 7 | 2 | 0.3 | 0.07 | - | - | bal. |
| Comparative Example 6 | 7 | 0.5 | 1.2 | 0.07 | - | - | bal. |
| Comparative Example 7 | 7 | 7 | 1.2 | 0.07 | - | - | bal. |

In Examples 1 to 7 and Comparative Examples 1 to 7, such prepared Al-Mg-Zr-Si-based high-strength aluminum alloys for 3D printing were processed to have a gauge length of 10 mm and a diameter of 4 mm, thereby producing tensile test specimens.

The surface of the produced test specimens was processed using a machine. Then, a tensile test was performed at room temperature according to ASTM E8 Standard Test Methods for Tension Testing of Metallic Materials. The measured yield strength and elongation are specified in Table 2 below.

[Table 2]

|  | Yield strength (MPa) | Elongation (%) |
|---|---|---|
| Example 1 | 460.3 | 12.3 |
| Example 2 | 454 | 11 |
| Example 3 | 476.9 | 7.8 |
| Example 4 | 495.5 | 4.3 |
| Example 5 | 423.4 | 8.6 |
| Example 6 | 438.6 | 2.7 |
| Example 7 | 429.6 | 5.3 |
| Comparative Example 1 | 368.1 | 8 |
| Comparative Example 2 | 309.2 | 17.6 |
| Comparative Example 3 | 320 | 2.1 |
| Comparative Example 4 | 310 | 1.1 |
| Comparative Example 5 | 375 | 9.1 |
| Comparative Example 6 | 381 | 12.3 |
| Comparative Example 7 | 280 | 0.2 |

Referring to Table 2 above, it is confirmed that all the Al-Mg-Zr-Si-based high-strength aluminum alloys for 3D printing manufactured in Examples 1 to 7 commonly have a yield strength of 400 MPa or more.

On the other hand, it is seen that in the case of Comparative Example 1 not containing Zr, yield strength is 328.1 MPa, and elongation is 8%, showing that the yield strength is reduced by 85.9 MPa and the elongation is reduced by 3% compared to those in the case of Example 2 having the same composition except for containing 1.2 wt% of Zr.

This is because the effects of $Al_3Zr$ phase formation and grain refinement failed to be realized without Zr as explained above. As a result, both the yield strength and elongation in the case of Comparative Example 1 were reduced compared to those in the case of Example 2.

It is seen that in the case of Comparative Example 2 containing 0 wt% of Si, yield strength is 309.2 MPa, and elongation is 17.6%, showing that the yield strength is reduced by a value of 114.2 to 129.4 MPa compared to that in the case of Examples 5 and 6, having the same composition except for the Si.

This is interpreted to be because Si is not contained in the case of Comparative Example 2, so the $Mg_2Si$ phase failed to be formed, and the fraction of the $Al_3Zr$ phase thus relatively increased. In other words, although the elongation was improved with the increasing $Al_3Zr$ phase, the $Mg_2Si$ phase failed to be formed, resulting in a decrease in strength. As a result, in the case of Comparative Example 2, the yield strength was confirmed to be reduced compared to that in the case of Examples 5 and 6.

In the case of Comparative Example 3 in which the weight ratio of Mg to Si is 1.25 and Comparative Example 4 in which the weight ratio of Mg and Si is 15, yield strengths are 320 MPa and 310 MPa, respectively. On the other hand, it is seen that in the case of Examples 1 to 7, in which the weight ratio of Mg to Si is in a range of 1.5 to 8.5, all yield strengths are 400 MPa. This is because the Mg and the Si failed to be suitably contained, so an appropriate amount of the $Mg_2Si$ phase failed to be precipitated. Specifically, in the case of Comparative Example 3, the $Mg_2Si$ phase was excessively formed, resulting in a significant decrease in elongation, and many test specimens fractured before the yield strength. In the case of Comparative Example 4, the yield strength was reduced due to a lack of the $Mg_2Si$ phase. For this reason, the weight ratio of the Mg to the Si contained preferably satisfies a range of Relation 1 below.

$$[\text{Relation 1}]$$

$$1.5 \leq [Mg]/[Si] \leq 8.5$$

(In Relation 1, [Mg] means the wt% of the Mg, and [Si] means the wt% of the Si.)

In particular, while the weight ratio of the Mg to the Si satisfies Relation 1, it is confirmed that in the case of Examples 1 to 3, containing 5 to 7 wt% of the Mg, yield strength is 460 MPa or more, and at the same time, elongation is 7.8% or more. Through this, it is confirmed that the Mg contained in an amount of 5 to 7 wt% within a range that satisfies Relation 1 is a composition that may obtain both yield strength and elongation.

In addition, in the case of Comparative Example 4, excessively contained Mg results in excessive fume generation during the manufacturing process, and laser scattering occurring during this process was confirmed to lead to a deterioration in the quality of the tensile test specimen. For this reason, the Mg is preferably contained in an amount of 2 to 13 wt%, and even more preferably in an amount of 5 to 7 wt%, falling within a range that satisfies Relation 1.

In the case of Comparative Example 5 containing 0.3 wt% of Zr, yield strength was confirmed to be reduced by 79 MPa compared to that in the case of Example 2 containing 1.2 wt% of Zr under the same composition.

This is because the Zr was contained in an amount of less than 0.5 wt%, so the degree of enhancing the strength by the $Al_3Zr$ phase was extremely minimal, as described above. As a result, the yield strength in the case of Comparative Example 5 was reduced compared to that in the case of Example 2.

It is seen that in the case of Comparative Example 6 containing 0.5 wt% of Si and Comparative Example 7 containing 7 wt% of Si, yield strengths are 381 MPa and 280 MPa, respectively, showing that the yield strength is reduced compared to that in the case of Example 2 containing 2 wt% of Si and Example 3 containing 4 wt% of Si, under the same composition. In addition, it is seen that in the case of Comparative Example 7, elongation is rapidly reduced to 0.2%.

This is because, in the case of Comparative Example 6, the Si is contained in an amount of less than 1 wt%, so the precipitation-strengthening effect by the $Mg_2Si$ phase was insufficiently realized, as described above. In addition, in the case of Comparative Example 7, the Si was contained in an amount exceeding 5 wt%, so the excessive fraction of the $Mg_2Si$ phase led to an increase in brittleness, resulting in a rapid decrease in elongation. In fact, it was confirmed that the tensile test specimens, manufactured according to Comparative Example 7, fractured before the yield strength.

**B. Comparison of productivity depending on component composition**

FIG. 2 is a graph to explain the correlation between ultimate tensile strength and beam speed depending on the amount of Si when fixing a laser output at 170 W.

Typically, in 3D printing, assuming that the laser output, hatch spacing (= beam scan spacing, hatching space), and layer thickness are fixed, the laser beam speed and product output speed are proportional. In other words, assuming that the conditions described above are fixed, a beam speed means an increase in product output speed. By checking whether appropriate yield strength is maintained under these conditions, productivity may be compared.

For this reason, aluminum alloy specimens (Examples 8 and 9, and Comparative Example 8) having the compositions shown in Table 3 below were further produced in addition to Examples 1, 2, and 3 and Comparative Example 2 described above.

[Table 3]

| | Mg | Si | Zr | Ca | Mn | Fe | Al |
|---|---|---|---|---|---|---|---|
| Example 1 | 5 | 2 | 1.2 | - | - | - | bal. |
| Example 2 | 7 | 2 | 1.2 | 0.07 | - | - | bal. |
| Example 3 | 7 | 4 | 1.2 | 0.07 | - | - | bal. |
| Example 8 | 7 | 1.5 | 0.9 | 0.07 | - | - | bal. |
| Example 9 | 8 | 1 | 0.9 | 0.08 | - | - | bal. |
| Comparative Example 2 | 10 | 0 | 0.6 | 0.1 | - | - | bal. |
| Comparative Example 8 | 10 | 0 | 1.2 | 0.1 | - | - | bal. |

Then, after fixing the laser output at 170 W, the layer thickness of 3D printing to 30 $\mu$m, and the hatch spacing to 150 $\mu$m, Table 4 below shows the ultimate tensile strength (UTS) values measured when varying the beam speed from 200 to 450 mm/s for all the aluminum alloy test specimens manufactured with the composition. In addition, FIG. 2 shows the ultimate tensile strength (UTS) values measured when varying the beam speed from 200 to 600 mm/s for some of the test specimens.

[Table 4]

| Beam speed (mm/s) | 200 | 225 | 250 | 275 | 300 | 325 | 350 | 375 | 400 | 425 | 450 |
|---|---|---|---|---|---|---|---|---|---|---|---|
| Example 1 | 454. 1 | 451. 8 | 457. 7 | 457. 4 | 461. 0 | 457. 3 | 462. 7 | 461. 8 | 464. 3 | 465. 7 | 465. 7 |
| Example 2 | 487. 3 | 492. 7 | 494. 7 | 497. 6 | 493. 0 | 488. 0 | 497. 6 | 483. 8 | 486. 4 | 487. 7 | 486. 5 |
| Example 3 | 496. 2 | 507. 3 | 498. 8 | 515. 8 | 514. 8 | 509. 5 | 508. 6 | 507. 5 | 506. 3 | 509. 7 | 513. 0 |
| Example 8 | 447. 0 | 448. 4 | 449. 7 | 455. 8 | 461. 9 | 457. 8 | 453. 7 | 455. 4 | 457. 1 | 459. 2 | 461. 3 |
| Example 9 | 452. 8 | 453. 5 | 454. 1 | 457. 8 | 461. 5 | 458. 9 | 456. 2 | 419. 3 | 382. 3 | 375. 4 | 368. 4 |
| Comparativ e Example 2 | 448. 4 | 462. 8 | 460. 1 | 450. 7 | 338. 4 | 357. 2 | - | - | - | - | - |
| Comparativ e Example 8 | 509. 4 | 489. 9 | 503. 1 | 497. 6 | 364. 7 | 381. 1 | - | - | - | - | - |

Referring to Table 4, in the case of Examples 1 to 3 and 8, to which 5 to 7 wt% of the Mg and 1 to 5 wt% of the Si are added, the ultimate tensile strength (UTS) of 450 MPa or more, more preferably, 450 to 550 MPa, is maintained at beam speeds in a range of 200 to 450 mm/sec.

On the other hand, in the case of Comparative Examples 2 and 8, containing less than 1 wt% of the Si, the ultimate tensile strength (UTS) is rapidly reduced to 400 MPa or lower at beam speeds of 300 mm/s or more. In addition, it is seen that the test specimens fail to be formed at beam speeds of 350 mm/s or more. In fact, in the case of the test specimens not containing the Si, hot cracking made 3D printing impossible at beam speeds of 350 mm/s or more.

In other words, it is confirmed that when containing less than 1 wt% of the Si, there is a limitation in improving productivity. Specifically, it was confirmed that in the case of Examples 1 to 3 and 8, to which 1 to 5 wt% of the Si was added, the productivity was increased by about two times compared to that in the case of Comparative Examples 2 and 8, containing less than 1 wt% of the Si.

On the other hand, it is confirmed that in the case of Example 9 containing 8 wt% of the Mg and 1 wt% of the Si, the aluminum alloy is able to be formed through 3D printing even at beam speeds of 200 to 450 mm/s. However, in the case of Example 9, the amount of the Si is relatively less than that of the Mg. Thus, the ultimate tensile strength (UTS) is confirmed to be rapidly weakened at beam speeds exceeding 350 mm/s. This means that a predetermined level of beam speed is required to be maintained to obtain sufficient strength in Example 9, indicating that productivity may be reduced compared to that in other examples.

Referring to FIG. 2, the ultimate tensile strength (UTS) is reduced to 400 MPa or lower at beam speeds of 350 to 450 mm/s. In addition, the ultimate tensile strength (UTS) is confirmed to be reduced again at beam speeds exceeding 500 mm/s. In fact, the test specimen prepared in Example 9 is confirmed to show a decrease of about 0.6 times compared to those prepared in Examples 1 to 3 and 8 to which 2 to 4 wt% of the Si is added.

Through Example 9, it is confirmed that the weight ratio of the Mg to the Si even more preferably satisfies Relation 2 below to maintain the productivity of the Al-Mg-Zr-Si-based high-strength aluminum alloy product manufactured through the 3D printing, that is, when fixing the laser output at 170 W.

[Relation 2]

$$1.5 \leq [Mg]/[Si] \leq 7.0$$

(In Relation 1, [Mg] means the wt% of the Mg, and [Si] means the wt% of the Si.)

According to one embodiment of the present disclosure, the Al-Mg-Zr-Si-based high-strength aluminum alloy for 3D printing may contain 2% to 13% of Mg, 1% to 5% of Si, and 0.5% to 1.5% of Zr in wt%, and the balance of Al and inevitable impurities.

Furthermore, to manufacture the Al-Mg-Zr-Si-based high-strength aluminum alloy product through 3D printing, the composition may be configured so that the weight ratio of the Mg to the Si satisfies the range of Relation 1 below.

[Relation 1]

$$1.5 \leq [Mg]/[Si] \leq 8.5$$

(In Relation 1, [Mg] means the wt% of the Mg, and [Si] means the wt% of the Si.)

For the Al-Mg-Zr-Si high-strength aluminum alloy product manufactured through the 3D printing to obtain a predetermined level of productivity, that is, to maintain the ultimate tensile strength (UTS) of 450 MPa or more at a beam speed in a range of 200 to 450 mm/sec, the weight ratio of the Mg to the Si more preferably satisfies Relation 2.

$$[\text{Relation 2}]$$

$$1.5 \leq [\text{Mg}]/[\text{Si}] \leq 7.0$$

(In Relation 1, [Mg] means the wt% of the Mg, and [Si] means the wt% of the Si.)

Lastly, to manufacture the aluminum alloy product having a yield strength of 450 MPa or more and an elongation of 7% or more while satisfying both Relations 1 and 2 above, the amount of Mg is preferably in a range of 5 to 7 wt%.

While the present disclosure has been described with reference to the above specific details and limited examples, which are provided for a more general understanding of the present disclosure, the present disclosure is not limited to the above examples. In addition, various modifications and variations may be made from these descriptions by those skilled in the art to which the present disclosure belongs.

Accordingly, the spirit of the present disclosure should not be construed to be limited to the described examples, and all modifications and equivalents thereof, as well as the appended claims, will be considered to fall within the scope of the present disclosure.

**Claims**

1. An Al-Mg-X-Y-based aluminum alloy for 3D printing,

   wherein the X reacts with the Al to form an Al-X intermetallic compound, and
   the Y reacts with the Mg to form an Mg-Y intermetallic compound.

2. The aluminum alloy of claim 1, wherein the X is any one element selected from among zirconium (Zr), titanium (Ti), scandium (Cs), hafnium (Hf), and yttrium (Y), and
   the Y may be any one element selected from among silicon (Si) tin (Sn), zinc (Zn), and germanium (Ge)

3. An Al-Mg-Zr-Si-based high-strength aluminum alloy for 3D printing, the aluminum alloy comprising 2% to 13% of Mg, 1% to 5% of Si, and 0.5% to 1.5% of Zr in wt%, and the balance of Al and inevitable impurities, wherein a weight ratio of the Mg to the Si satisfies Relation 1,

$$[\text{Relation 1}]$$

$$1.5 \leq [\text{Mg}]/[\text{Si}] \leq 8.5$$

   (in Relation 1, [Mg] means the wt% of the Mg, and [Si] means the wt% of the Si).

4. The aluminum alloy of claim 3, wherein the aluminum alloy comprises 5 to 10 wt% of the Mg.

5. The aluminum alloy of claim 3, further comprising 0.01 to 0.2 wt% of the Ca.

6. The aluminum alloy of claim 3, wherein the aluminum alloy is provided in a powder or wire form.

7. An Al-Mg-Zr-Si-based high-strength aluminum alloy product manufactured by 3D printing, wherein the Al-Mg-Zr-Si-based high-strength aluminum alloy comprises 2% to 13% of Mg, 1% to 5% of Si, and 0.5% to 1.5% of Zr in wt%, and the balance of Al and inevitable impurities, and
   a weight ratio of the Mg to the Si satisfies Relation 1,

[Relation 1]

$$1.5 \leq [Mg]/[Si] \leq 8.5$$

(in Relation 1, [Mg] means the wt% of the Mg, and [Si] means the wt% of the Si).

8. The aluminum alloy product of claim 7, wherein the aluminum alloy product has a yield strength of 400 to 500 MPa.

9. The aluminum alloy product of claim 7, wherein the aluminum alloy product comprises 5 to 10 wt% of the Mg.

10. The aluminum alloy product of claim 7, wherein the aluminum alloy product has an elongation of 7% or more.

11. A method of manufacturing an Al-Mg-Zr-Si-based high-strength aluminum alloy product through 3D printing, the method comprising:

   (a) preparing an Al-Mg-Zr-Si-based aluminum alloy powder or wire comprising 2% to 13% of Mg, 1% to 5% of Si, and 0.5% to 1.5% of Zr in wt%, and the balance of Al and inevitable impurities, wherein a weight ratio of the Mg to the Si satisfies Relation 1; and
   (b) manufacturing a printed product of the Al-Mg-Zr-Si-based aluminum alloy powder through 3D printing,

[Relation 1]

$$1.5 \leq [Mg]/[Si] \leq 8.5$$

(in Relation 1, [Mg] means the wt% of the Mg, and [Si] means the wt% of the Si).

12. The method of claim 11, wherein the aluminum alloy powder or wire comprises 5 to 10 wt% of the Mg.

13. The method of claim 11, wherein the aluminum alloy powder or wire further comprises 0.01 to 0.2 wt% of Ca.

FIG.1

PREPARING Al–Mg–Si–Zr–BASED
ALUMINUM ALLOY POWDER OR WIRE

MANUFACTURING PRINTED PRODUCT OF
PREPARED POWDER OR WIRE
THROUGH 3D PRINTING

FIG.2

## INTERNATIONAL SEARCH REPORT

| International application No. |
| --- |
| **PCT/KR2022/006336** |

**A.    CLASSIFICATION OF SUBJECT MATTER**

**C22C 21/06**(2006.01)i; **C22C 1/04**(2006.01)i; **C22F 1/043**(2006.01)i; **B22F 10/00**(2021.01)i

According to International Patent Classification (IPC) or to both national classification and IPC

**B.    FIELDS SEARCHED**

Minimum documentation searched (classification system followed by classification symbols)

C22C 21/06(2006.01); B22F 1/00(2006.01); B22F 3/10(2006.01); B22F 3/105(2006.01); B22F 3/16(2006.01);
B22F 9/08(2006.01); C22C 21/10(2006.01); C22F 1/00(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 알루미늄합금(aluminium alloy), 분말(powder), 적층가공(additive layer
manufacturing), 3D프린팅(3D printing)

**C.    DOCUMENTS CONSIDERED TO BE RELEVANT**

| Category* | Citation of document, with indication, where appropriate, of the relevant passages | Relevant to claim No. |
| --- | --- | --- |
| X | WO 2013-029589 A1 (EADS DEUTSCHLAND G.M.B.H. et al.) 07 March 2013 (2013-03-07)<br>See abstract and claims 1-5. | 1-2 |
| A | | 3-13 |
| A | JP 2017-186642 A (AIRBUS DEFENCE & SPACE G.M.B.H.) 12 October 2017 (2017-10-12)<br>See claims 1 and 12. | 1-13 |
| A | JP 2017-155291 A (KOIWAI CO., LTD. et al.) 07 September 2017 (2017-09-07)<br>See claims 1 and 7. | 1-13 |
| A | KR 10-2021-0018155 A (ACTS TECHNOLOGIES INC.) 17 February 2021 (2021-02-17)<br>See claims 1 and 8. | 1-13 |
| A | JP 2018-532044 A (QUESTEK INNOVATIONS L.L.C.) 01 November 2018 (2018-11-01)<br>See claims 1-10. | 1-13 |

☐ Further documents are listed in the continuation of Box C.          ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **26 July 2022** | **26 July 2022** |

| Name and mailing address of the ISA/KR | Authorized officer |
| --- | --- |
| **Korean Intellectual Property Office**<br>**Government Complex-Daejeon Building 4, 189 Cheongsa-**<br>**ro, Seo-gu, Daejeon 35208** | |
| Facsimile No. **+82-42-481-8578** | Telephone No. |

Form PCT/ISA/210 (second sheet) (July 2019)

**INTERNATIONAL SEARCH REPORT**
**Information on patent family members**

International application No.

**PCT/KR2022/006336**

| Patent document cited in search report | | | Publication date (day/month/year) | Patent family member(s) | | | Publication date (day/month/year) |
|---|---|---|---|---|---|---|---|
| WO | 2013-029589 | A1 | 07 March 2013 | DE | 102011111365 | A1 | 28 February 2013 |
| | | | | EP | 2766136 | A1 | 20 August 2014 |
| | | | | EP | 2766136 | B1 | 30 October 2019 |
| | | | | EP | 3590634 | A2 | 08 January 2020 |
| | | | | EP | 3590634 | A3 | 08 April 2020 |
| | | | | EP | 3590634 | B1 | 30 June 2021 |
| JP | 2017-186642 | A | 12 October 2017 | CN | 106801171 | A | 06 June 2017 |
| | | | | CN | 106801171 | B | 10 January 2020 |
| | | | | DE | 102015221643 | A1 | 04 May 2017 |
| | | | | EP | 3165620 | A1 | 10 May 2017 |
| | | | | EP | 3165620 | B1 | 30 September 2020 |
| | | | | JP | 6744198 | B2 | 19 August 2020 |
| | | | | US | 2017-0121794 | A1 | 04 May 2017 |
| JP | 2017-155291 | A | 07 September 2017 | | None | | |
| KR | 10-2021-0018155 | A | 17 February 2021 | EP | 4012062 | A1 | 15 June 2022 |
| | | | | WO | 2021-025531 | A1 | 11 February 2021 |
| JP | 2018-532044 | A | 01 November 2018 | EP | 3344787 | A1 | 11 July 2018 |
| | | | | US | 10941473 | B2 | 09 March 2021 |
| | | | | US | 2018-0245190 | A1 | 30 August 2018 |
| | | | | WO | 2017-041006 | A1 | 09 March 2017 |

Form PCT/ISA/210 (patent family annex) (July 2019)

**EP 4 335 943 A1**

## REFERENCES CITED IN THE DESCRIPTION

### Patent documents cited in the description

- KR 101754523
- KR 101145124